# FASCICULE DE BREVET EUROPEEN

(11) **EP 0 433 111 B1**
(45) Date de publication et mention de la délivrance du brevet: **21.07.1993**
(21) Numéro de dépôt: 90403218.2
(22) Date de dépôt: 14.11.1990
(51) Int. Cl.: F01D 9/04

(54) **Elément de stator de turbomachine**
Statorelement einer Turbomaschine
Element of the stator of a turbo machine

(30) Priorité: 15.11.1989 FR 8914963
(43) Date de publication de la demande: 19.06.1991
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Carletti, Ollivier, F-77700 Vaux Le Penil (FR); Thomas, Michel, Elie Armand, Jean-Marie, F-91250 Saintry Sur Seine (FR)
(74) Mandataire: Moinat, François

(56) Documents cités:
- GB-A- 722 458
- US-A- 2 857 093
- US-A- 2 914 300
- US-A- 3 291 382
- US-A- 3 442 442
- US-A- 4 378 961

## Description

La présente invention concerne un élément de stator de turbomachine comprenant des aubes fixes assemblées sur une virole.

Diverses recherches menées actuellement dans le domaine des turbomachines et notamment des turboréacteurs à applications aéronautiques civiles ou militaires amènent à mettre en oeuvre l'utilisation de matériaux composites pour la réalisation de pièces de moteur, notamment en vue d'obtenir une réduction des masses et un allongement de durée de vie des pièces ainsi qu'une diminution des coûts. On est ainsi amené à envisager la réalisation de stators de turbomachine comportant un aubage fixe assemblé sur une virole en matériau composite, notamment à la périphérie externe du stator.

Certaines solutions ont déjà été proposées pour résoudre les problèmes posés par la liaison entre un aubage fixe et la virole correspondante de stator. FR-A-2 599 081 décrit des pales d'aubes de redresseur comportant une extrémité en bulbe encastrée dans des cales retenues dans des alvéoles formés sur une couronne externe fixée au carter. FR-A-1 021 265 décrit une aube de stator dont la plate-forme est enserrée entre une couronne intérieure et une couronne extérieure. FR-A-2 568 953 décrit une aube fixe dont l'extrémité supérieure en forme de coin est fixée par collage dans une plate-forme fixée dans le carter qui recouvre l'extrémité de l'aube. US-A-2 914 300 décrit une aube fixe dont la fixation d'une extrémité dans un logement ménagé dans une virole, est assurée au moyen d'une plate-forme. Ces solutions ne répondent toutefois pas parfaitement à toutes les exigences et conditions posées dans certaines applications particulières. Notamment, les problèmes posés par les applications dans lesquelles la virole de stator sur laquelle doivent être montées les aubes fixes ne supporte pas sans dommage les efforts en compression n'ont pas reçu de solution satisfaisante. Un des buts de l'invention est par conséquent de permettre la réalisation d'un élément de stator de turbomachine répondant à ces problèmes sans encourir les inconvénients des solutions connues.

Un élément de stator du type précité répondant à ces conditions est caractérisé en ce que les aubes comportent une tête encastrée dans un logement ménagé sur la virole dans laquelle la fixation de l'aube est assurée au moyen de deux pièces dites plates-formes composée chacune d'une partie formant plaque entre lesquelles la virole est enserrée et d'une partie solidaire formant douille, placées l'une à l'intérieurde l'autre et entourant la tête d'aube.

Avantageusement une solidarisation par collage ou brasage peut être réalisée entre aubes, plates-formes et virole.

D'autres caractéristiques et avantages de l'invention seront mieux compris à la lecture de la description qui va suivre de deux modes de réalisation de l'invention, en référence aux dessins annexés sur lesquels :
- la figure 1 représente, selon une vue partielle développée, en coupe par un plan transversal perpendiculaire à l'axe longitudinal d'une turbomachine, un élément de stator de turbomachine selon un premier mode de réalisation de l'invention ;
- la figure 2 représente un élément de stator de turbomachine analogue à celui qui est représenté sur la figure 1, selon une vue schématique en perspective ;
- les figures 3A et 3B montrent selon une vue en perspective et éclatée des détails de parties de l'élément de stator de turbomachine représenté sur les figures 1 et 2 ;
- la figure 4 représente, selon une vue en coupe analogue à celle de la figure 1, un élément de stator de turbomachine selon un deuxième mode de réalisation de l'invention.

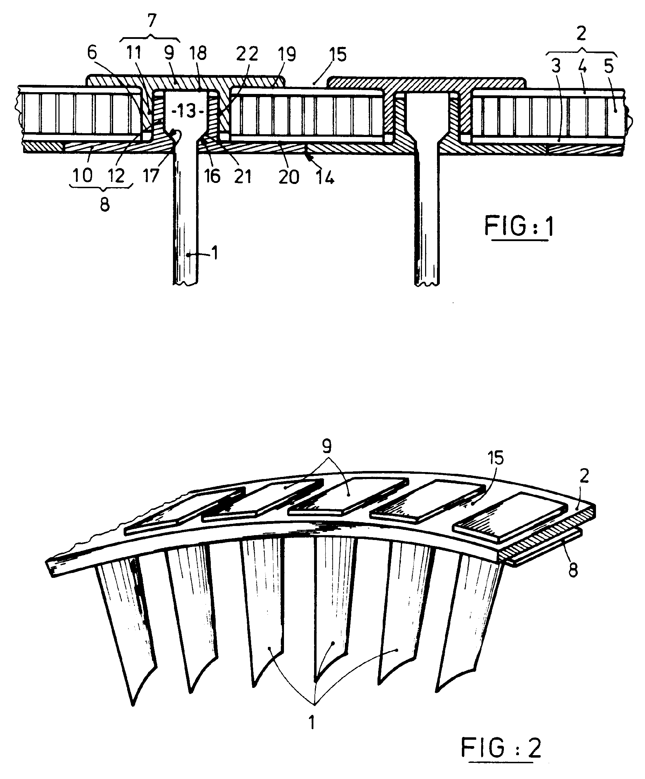

Un élément de stator de turbomachine, constitué notamment dans l'exemple représenté sur les figures 1, 2, 3A et 3B par un étage de redresseur d'un compresseur basse-pression d'une turbomachine, se compose d'une série d'aubes fixes 1 également réparties périphériquement montées radialement sur une virole extérieure 2, dans l'exemple représenté.

Dans certaines applications, particulièrement visées par l'invention, ladite virole 2 est réalisée en matériau composite. Notamment, dans l'exemple représenté sur la figure 1, un matériau du type sandwich est utilisé et est constitué de deux peaux, l'une interne 3 et l'autre externe 4, peaux minces en tissu ou de type unidirectionnel, en fibres, notamment à base de carbone, de verre ou d'aramide, imprégnées d'une matrice organique telle qu'une résine époxyde, peaux collées à une âme 5 à structure du type nid d'abeille ou en mousse à basse densité. Dans ladite virole 2, des logements 6 sont ménagés. Une structure de virole du genre qui vient d'être décrit pour la virole 2 ne peut pas supporter sans dommage des efforts en compression sur les bords des ouvertures 6 qui ont ainsi été pratiquées. Les moyens conformes à l'invention d'assemblage des aubes fixes 1 sur la virole 2 permettent le passage des efforts d'encastrement des aubes 1 dans les logements 6. Pour cela, dans le premier mode de réalisation de l'invention représenté sur les figures 1, 2, 3A et 3B, la virole 2 est enserrée entre deux plates-formes, une plate-forme supérieure 7 et une plate-forme inférieur 8. Chaque plate-forme, respectivement 7 et 8, est constituée d'une plaque, respectivement 9 en appui sur la peau externe 4 de la virole 2 et 10 en appui sur la peau interne 3 de la virole 2 et d'un élément solidaire en forme de douille, respectivement 11 et 12. L'aube fixe 1 porteà son extrémité une tête 13 qui se trouve encastrée dans la douille 12, l'aube 1 traversant la plate-forme inférieure 8 et la douille 12 est placée à l'intérieur de la douille 11 qui s'adapte dans le logement 6 de la virole 2. Les plates-formes inférieures 8 d'un même étage de redresseur peuvent être jointives, comme indiqué en 14 sur la figure 1 ou, au contraire, un espace peut être ménagé entre elles, comme représenté en 15 pour les plates-formes supérieures 7, sur les figures 1 et 2.

Dans le mode de réalisation représenté sur les figures 1, 2, 3A et 3B, les têtes 13 des aubes fixes 1 sont recouvertes aux extrémités des aubes par les plates-formes 9 supérieures. Les têtes 13 d'aubes, ainsi que les alésages internes des douilles 12 des plates-formes inférieures 8 présentent des surfaces coniques coopérantes, respectivement 16 et 17. En outre, une liaison rigide entre les pièces est adjointe. Dans le cas de pièces en matériau composite, cette liaison est notamment obtenue par collage et lorsque des éléments métalliques sont utilisés, il peut s'agir d'un brasage. Des points de solidarisation peuvent ainsi être prévus, en 18 entre la plate-forme extérieure 9 et la tête 13 de l'aube 1, en 19 entre la plate-forme extérieure 9 et la virole 2, en 20 entre la plate-forme intérieure 8 et la virole 2, en 21 entre la tête 13 de l'aube 1 et la plate-forme intérieure 8 ou entre les deux douilles 11 et 12 des deux plates-formes respectivement extérieure 9 et intérieure 8, en 22. En fonction des applications, seuls certains parmi ces points de solidarisation peuvent être retenus.

Dans tous les cas, les moyens d'assemblage conformes à l'invention qui viennent d'être décrits en référence aux figures 1, 2, 3A et 3B, entre la tête 13 de l'aube 1 et la virole 2, permettent un encastrement évitant de solliciter les bords des logements 6 de la virole 2 en compression. Ce mode de montage permet une découpe des logements 6 dans la virole 2 sans indexage préalable de ladite virole 2 et facilite également après fonctionnement le remplacement éventuel d'une aube fixe 1 indépendamment du reste de l'aubage.

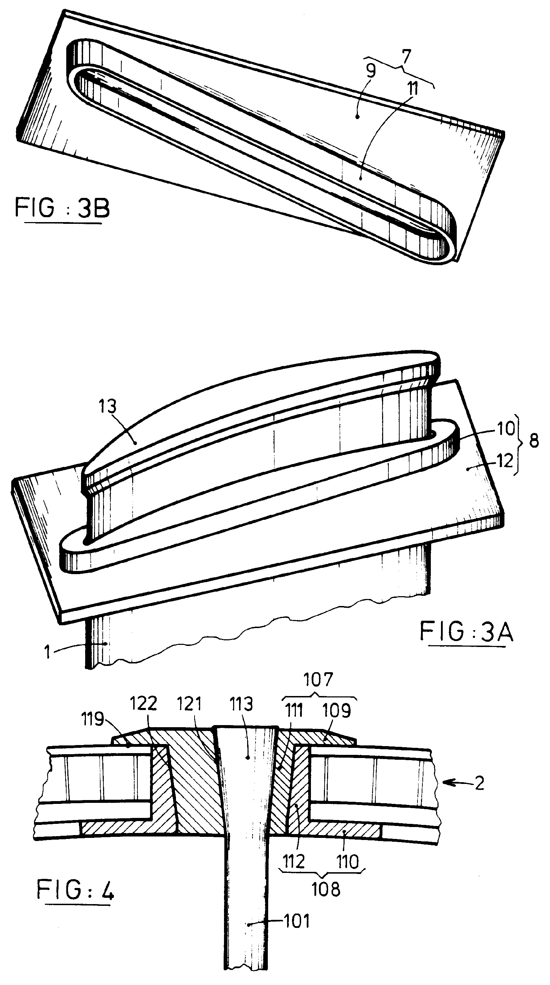

Dans le second mode de réalisation de l'invention représenté sur la figure 4, l'aube 101 présente une tête 113 à forme tronconique insérée dans la plate-forme supérieure 107 dont l'élément en forme de douille 111 présente également des bords tronconiques et est placé à l'intérieur de l'élément en forme de douille 112 solidaire de la plate-forme inférieure 108.

Comme précédemment, la virole 2 est enserrée entre les éléments en forme de plaque, respectivement 109 et 110 des plates-formes supérieure 107 et inférieure 108. On réalise ainsi un montage radial des aubes 101 traversant les deux plates-formes 107 et 108. Comme précédemment, un joint collé est ménagé en 119 entre plate-forme supérieure 107 et virole 2, en 122 entre les deux plates-formes 107 et 108 et en 121, entre la tête 113 de l'aube 101 et la douille 111 de la plate-forme supérieure 107. Les efforts aérodynamiques s'exerçant en fonctionnement sur les profils des aubes 101 sont ainsi repris par cisaillement des joints collés, sans exercer d'efforts de compression sur la virole 2 sur les bords des logements.

## Revendications

1. Elément de stator de turbomachine comprenant des aubes fixes (1 ; 101) disposées en aubage et assemblées sur une virole (2), notamment du côté diamétralement externe, caractérisé en ce que lesdites aubes (1 ; 101) comportent une tête (13 ; 113) encastrée dans un logement (6) ménagé sur ladite virole (2) dans laquelle la fixation de l'aube est assurée au moyen de deux pièces dites plates-formes 7,8 ; 107,108) composée chacune d'une partie formant plaque (9, 10 ; 109, 110) entre lesquelles la virole (2) est enserrée et d'une partie solidaire formant douille (11, 12 ; 111, 112) placées l'une à l'intérieur de l'autre et entourant la tête (13, 113) d'aube.

2. Elément de stator de turbomachine selon la revendication 1, dans lequel l'aube (1) traverse la plate-forme inférieure (8) et la tête d'aube (13) est recouverte par la plate-forme supérieure (9), la douille (12) partie de la plate-forme inférieure (8) étant placée à l'intérieur de la douille (11) partie de la plate-forme supérieure (9) et comportant au moins un rebord interne (17) de forme conique coopérant avec une partie (16) correspondante de la tête (13) d'aube.

3. Elément de stator de turbomachine selon la revendication 1 dans lequel l'aube (101) traverse les plates-formes inférieure (108) et supérieure (107) et la douille (111) qui est solidaire de la plate-forme supérieure (107), est placée à l'intérieur de la douille (112) solidaire de la plate-forme inférieure (108) et comporte au moins une partie de son alésage interne de forme conique coopérant avec une partie correspondante de la tête (113) d'aube.

4. Elément de stator de turbomachine selon l'une quelconque des revendications 1 à 3 dans lequel la plate-forme inférieure (8) est solidarisée avec la surface coopérante de la virole (2) par collage ou brasage.

5. Elément de stator de turbomachine selon l'une quelconque des revendications 1, 2 et 4 dans lequel la plate-forme inférieure (8) est solidarisée avec l'aube (1) par collage ou brasage entre les surfaces coopérantes (16, 17) de douille et de tête d'aube.

6. Elément de stator de turbomachine selon l'une quelconque des revendications 1 à 5 dans lequel la plate-forme supérieure (7 ; 107) est solidarisée avec la surface coopérante de la virole (2) par collage ou brasage.

7. Elément de stator de turbomachine selon l'une quelconque des revendications 1, 3, 4 et 6 dans lequel la plate-forme supérieure (7 ; 107) est solidarisée avec l'aube (1 ; 101) par collage ou brasage entre les surfaces coopérantes de plaque (9) ou de douille (111) et de tête (13 ; 113) d'aube.

8. Elément de stator de turbomachine selon l'une quelconque des revendications 1 à 7 dans lequel les douilles (11, 12 ; 111, 112) respectives de plate-forme supérieure (7 ; 107) et de plate-forme inférieure (8; 108) sont solidarisées entre elles par collage ou brasage.

9. Elément de stator de turbomachine selon l'une quelconque des revendications 1 à 8 dans lequel les plates-formes inférieures (8) sont jointives et recouvrent la surface entière coopérante de la virole (2).

10. Elément de stator de turbomachine selon l'une quelconque des revendications 1 à 9 dans lequel ladite virole (2) est constituée d'un matériau composite du type sandwich comprenant deux peaux stratifiées, respectivement interne (3) et externe (4), en fibres imprégnées d'une matrice organique, qui sont collées à une âme (5) à structure du type nid d'abeille ou mousse à basse densité.

## Patentansprüche

1. Statorelement für eine Turbomaschine mit festen Schaufeln (1; 101), die als Schaufelkranz angeordnet und, insbesondere auf der diametral äußeren Seite, an einem Ring (2) montiert sind, dadurch gekennzeichnet, daß die Schaufeln (1; 101) einen Kopf (13; 113) besitzen, der in eine in dem genannten Ring (2) ausgebildete Aufnahme (6) eingesetzt ist, wobei Befestigung der Schaufel in dieser Aufnahme mit Hilfe zweier als Plattformen bezeichneter Teile (7, 8; 107, 108) gesichert ist, die jeweils aus einem eine Platte (9, 10; 109, 110) bildenden Teil und einem damit fest verbundenen, eine Buchse (11, 12; 111, 112) bildenden Teil bestehen, wobei der Ring (2) zwischen den genannten Platten eingespannt ist, die Buchsen ineinander angeordnet sind und den Schaufelkopf (13, 113) umschließen.

2. Statorelement für eine Turbomaschine nach Anspruch 1, bei dem die Schaufel (1) durch die untere Plattform (8) dringt und der Schaufelkopf (13) von der oberen Plattform (9) abgedeckt ist, wobei die einen Teil der unteren Plattform bildende Buchse (12) im Innern der einen Teil der oberen Plattform (9) bildenden Buchse (11) angeordnet ist, und wenigstens eine konische Randleiste (17) aufweist, die mit einem korrespondierenden Teil (16) des Schaufelkopfes (13) zusammenwirkt.

3. Statorelement für eine Turbomaschine nach Anspruch 1, bei dem die Schaufel (101) durch die untere und durch die obere Plattform (108 bzw. 107) dringt und die mit der oberen Plattform (107) fest verbundene Buchse (111) im Innern der mit der unteren Plattform (108) fest verbundenen Buchse (112) angeordnet ist und in wenigstens einem Teil ihrer inneren Bohrung konisch ausgebildet ist und mit mit einem korrespondierenden Teil des Schaufelkopfes (113) zusammenwirkt.

4. Statorelement für eine Turbomaschine nach einem der Ansprüche 1 bis 3, bei dem die untere Plattform (7) und die mit ihr zusammenwirkende Fläche des Rings (2) durch eine Klebe- oder Lötverbindung fest verbunden ist.

5. Statorelement für eine Turbomaschine nach einem der Ansprüche 1, 2 und 4, bei dem die untere Plattform (7) mit der Schaufel (1) durch Klebe- oder Lötverbindung zwischen den zusammenwirkenden Flächen (16, 17) der Buchse und des Schaufelkopfes fest verbunden ist.

6. Statorelement für eine Turbomaschine nach Anspruch 5, bei dem die obere Plattform (7; 107) und die mit ihr zusammenwirkende Fläche des Rings (2) durch eine Klebe- oder Lötverbindung fest verbunden ist.

7. Statorelement für eine Turbomaschine nach einem der Ansprüche 1, 3, 4 und 6, bei dem die untere Plattform (7; 107) mit der Schaufel (1; 101) durch eine Klebe- oder Lötverbindung zwischen den zusammenwirkenden Flächen der Platte (109) bzw. der Buchse (111) und des Schaufelkopfes (13; 113) fest verbunden ist.

8. Statorelement für eine Turbomaschine nach einem der Ansprüche 1 bis 7, bei dem die jeweiligen Buchsen (11, 12; 111, 112) der oberen Plattform (7; 107) und der unteren Plattform (8; 108) durch eine Klebe- oder Lötverbindung fest miteinander verbunden sind.

9. Statorelement für eine Turbomaschine nach einem der Ansprüche 1 bis 8, bei dem die untere Plattformen (8) aneinanderstoßend angeordnet sind und die gesamte mit ihnen zusammenwirkende Fläche des Rings (2) bedecken.

10. Statorelement für eine Turbomaschine nach einem der Ansprüche 1 bis 9, bei dem der Ring (2) aus einem Sandwich-Verbundmaterial besteht mit einer inneren und einer äußeren Schichthaut (3 bzw. 4) aus mit einer organischen Grundmasse imprägnierten Fasern, die auf einen Kern (5) mit Wabenstruktur oder aus einem Schaum geringer Dichte aufgeklebt sind.

## Claims

1. Turboshaft engine stator element comprising fixed blades (1; 101) arranged as a set of blading and fitted to a shell (2), notably on the diametrically outer side, characterised in that the said blades (1; 101) comprise a head (13, 113) mortised in a housing (6) formed in the said shell (2) in which the fixing of the blade is ensured by means of two components called platforms (7, 8 ; 107, 108) each made up of a part forming a plate (9, 10 ; 109, 110) between which the shell (2) is gripped and of an integral part forming a bush (11, 12 ; 111, 112) fitting inside each other and surrounding the head (13, 113) of the blade.

2. Turboshaft engine stator element in accordance with Claim 1 in which the blade (1) passes through the lower platform (8) and the head of the blade (13) is covered by the upper platform (9), the bush (12) which is a part of the lower platform (8) fitting inside the bush (11) which is a part of the upper platform (9) and comprising at least one inner shoulder (17) of conical shape matching a corresponding part (16) of the blade head (13).

3. Turboshaft engine stator element in accordance with Claim 1 in which the blade (101) passes through the lower (108) and upper (107) platforms and the bush (111) which is an integral part of the upper platform (107) fits inside the bush (112) which is an integral part of the lower platform (108) and comprises at least one part of its bore with a conical shape matching a corresponding part of the blade head (113).

4. Turboshaft engine stator element in accordance with any of Claims 1 to 3 in which the lower platform (8) is fixed to the matching surface of the shell (2) by bonding or brazing.

5. Turboshaft engine stator element in accordance with any of Claims 1, 2 and 4 in which the lower platform (8) is fixed to the blade (1) by bonding or brazing of the matching surfaces (16, 17) of the bush and the blade head.

6. Turboshaft engine stator element in accordance with any of Claims 1 to 5 in which the upper platform (7 ; 107) is fixed to matching surface of the shell (2) by bonding or brazing.

7. Turboshaft engine stator element in accordance with any of Claims 1, 3, 4 and 6 in which the upper platform (7 ; 107) is fixed to the blade (1) by bonding or brazing of the matching surfaces of the plate (9) or the bush (111) and the blade head (13 ; 113).

8. Turboshaft engine stator element in accordance with any of Claims 1 to 7 in which the respective bushes (11, 12 ; 111, 112) of the upper (7 ; 107) and lower (8 ; 108) platforms are fixed together by bonding or brazing.

9. Turboshaft engine stator element in accordance with any of Claims 1 to 7 in which the lower platforms (8) are joined and cover the entire matching surface of the shell (2).

10. Turboshaft engine stator element in accordance with any of Claims 1 to 9 in which the said shell (2) is made of a composite material of the sandwich type comprising two laminated skins, respectively inner (3) and outer (4) in fibres impregnated with an organic matrix [sic. matter] ,which are bonded to a core (5) with a structure of honeycomb type of low density foam.
